# EUROPEAN PATENT APPLICATION

(11) **EP 2 532 535 A1**
(43) Date of publication of application: **12.12.2012**
(21) Application number: 11736968.6
(22) Date of filing: 25.01.2011
(51) Int. Cl.: B60C 5/00, B60C 17/04, B60C 17/06

(54) **SUPPORT BODIES FOR IN-TIRE DEVICES, TIRE, AND TIRE ASSEMBLY**

(30) Priority: 01.02.2010 JP 2010019951
(71) Applicant: Acoustic Innovations Co. Ltd., Tokyo 180-0023 (JP)
(72) Inventor: SOMA, Ippei, Musashino-shi Tokyo 180-0023 (JP)
(74) Representative: Betten & Resch
(86) International application number: PCT/JP2011/051271
(87) International publication number: WO 2011/093255

(57) **Abstract**

Support bodies which, in the hollow space within a tire, stably hold for a long period of time a system, etc. for reducing the noise of the tire are configured so that the support bodies can be mass-produced, are simple, and are low cost. A tire (01) is mounted to a wheel (02). The black-filled portions in the figure represent support bodies of a first invention, adapted to support in-tire devices. The support bodies (03) for in-tire devices are fixed by being sandwiched between the bead sections (04) of the tire and the rim (05) of the wheel. A portion sandwiched between the rim and each of the bead sections is called a sandwiched section. Among portions of each of the support body for in-tire device, a portion which is connected to or is formed integrally with the sandwiched section and which protrudes to the inner side of the tire is called a device support section. A quiet system (06) for reducing the noise of the tire is fixed to the device support sections. Thus, the support body for in-tire device enable the devices, such as tire quiet system, etc., to be stably supported in the hollow space within the tire.

## Description

### Field of the Invention

The present invention relates to a technology for supporting a device system installed for reduction of tire noise in the hollow space inside the tire formed between a tubeless tire and a rim.

### Background Art

Japanese Unexamined Utility Model Application Publication No. 2008-273517 discloses a technology for reducing tire noise. In Japanese Unexamined Utility Model Application Publication No. 2008-273517, a bubble layer is stored in the hollow space within the tire, thereby reducing the tire noise, and two bead sections and the bubble layer are bonded by a binder layer provided therebetween, so that the bubble layer is supported in the hollow space within the tire.

Moreover, in Japanese Unexamined Utility Model Application Publication No. 2008-238971, a support body for fixation of a core for withstanding load in running flat after puncture in air chamber inside the run flat tire is disclosed. The support body is in contact with the inside the tire bead section, and uneven portion having grooves, holes, rough surface is formed on the contact surface, or adhesive portion having sticky material, thereby having a non-slip section.
Patent Reference 1: Japanese Unexamined Patent Application Publication No. 2008-273517
Patent Reference 2: Japanese Unexamined Patent Application Publication No. 2008-238971

### Disclosure of the Invention

### Problems that the Invention Tries to Solve

In Japanese Unexamined Patent Application Publication No. 2008-273517, the two bead sections and the bubble layer are bonded by a binder layer provided therebetween, and it is just disclosed that the binder layer may be 'butyl material layer not including foaming agent', and there is no disclosure of concrete binding method. It is inferable that the binding is performed using adhesive etc.

However, the adhesion to vulcanized tire rubber includes a deficiency that plasticizer contained in the rubber material seeps due to aging, and this makes long-lasting adhesion difficult. Moreover, the rubber material internal wall of the tire contains much wax and plasticizer for smooth sliding upon contact with bladder in vulcanization, and this makes the adhesion to the internal wall difficult. Moreover, when applying high pressure and high temperature from inside in vulcanization using bladder, fixation of any material to the internal wall or inside of the tire in the process before the vulcanization causes transformation of the fixed material or air leak from the internal tire material, leading to deterioration of tire quality. Even when solving such deficiencies, the process of adhesion requires long hours and high cost, and is unsuitable for mass-production.

Meanwhile, in Japanese Unexamined Patent Application Publication No. 2008-238971, although the support bodies have deficiencies similar to the first embodiment in adhesion of the non-slip section to the tire bead section using adhesive, in forming the grooves and holes on the surface of the non-slip section, it is possible to assemble the tire and the support bodies manufactured in separate process upon assembly of the rim, so that the above deficiencies are solved.

However, the support bodies in Japanese Unexamined Patent Application Publication No. 2008-238971 cannot support the flexibly-deforming soft material such as the bubble layer in Japanese Unexamined Patent Application Publication No. 2008-273517 with adequate strength, while supporting the device such as the metal core or synthetic-resin core in Japanese Unexamined Patent Application Publication No. 2008-238971, having adequate hardness enough to be stably sandwiched between the tire bead sections.

An objective of the present invention is to provide the technology for long-lasting support of a device system installed for reduction of tire noise in the hollow space inside the tire, irrespective of device's shape and material, without adhesion, in a simple manner, and at low-cost.

### Means for Salving the Problems

In order to solve the above deficiencies, the applicant provides a method for sandwiching a thin plate material between the tire bead sections and a rim, thereby fixing devices to be supported in the hollow space within the tire to the partial member. A first aspect described in Claim 1 is such member, and is a support body for in-tire device, comprising a sandwiched section, being sandwiched between a bead section and a rim or a wheel, and being fixed, and a device support section for supporting a device in an internal side of the tire.

A second aspect described in Claim 2 is the support body for in-tire device according to Claim 1 being used for a tire having the bead section with a concave portion, wherein the sandwiched section further comprises a protrusion for preventing slip of the sandwiched section by being fited in the concave portion.

A third aspect described in Claim 3 is a tire having the bead section with the concave portion for fixing the protrusion of the support body for in-tire device according to Claim 1.

A fourth aspect described in Claim 4 is a tire assembly supporting the in-tire device utilizing the support body for in-tire device according to Claim 1 or 2.

A fifth aspect described in Claim 5 is the tire assembly according to Claim 4, wherein the device is a tire silent system partitioning internal space of the tire into a plurality of spaces by a gas-permeable member.

A sixth aspect described in Claim 6 is the tire assembly according to Claim 5, wherein the tire silent system is placed inside the tire in a circular pattern around a wheel axis, and the support body for in-tire device also has a circle shape in conformity with the system.

### Effects of the Invention

The support bodies are sandwiched between the tire bead sections and the rim utilizing the pressure therebetween, thereby being fixed, so that there is no possibility of detachment due to aging as in fixation using adhesive, and enables the long-lasting fixation of a device system in the hollow space inside the tire. Moreover, it is possible to assemble the tire and the support bodies manufactured in separate process upon assembly of the rim, thereby enabling simple and low-cost manufacturing.

### BRIEF DESCRIPTION OF THE DRAWINGS

Fig. 1 is a conceptual diagram of support body for in-tire device of a first embodiment.
Fig. 2 is a plane view when mounting the support body for in-tire device of the first embodiment to the tire.
Fig. 3 is another plane view when mounting the support body for in-tire device of the first embodiment to the tire.
Fig. 4 is a plane view when mounting the support body for in-tire device of the first embodiment to a rim of the tire after mounting it to the tire.
Fig. 5 is a plane view when mounting the support body for in-tire device of the first embodiment to a rim of the tire after mounting it to the tire.
Fig. 6 is a diagram exemplifying support body for in-tire device not having a circle shape
Fig. 7 is a conceptual diagram of support body for in-tire device of a second embodiment.
Fig. 8 is a diagram exemplifying support body for in-tire device having a plurality of protrusions.
Fig. 9 is an enlarged view showing the support body for in-tire device of the second embodiment fixed with tire bead section.
Fig. 10 is a cubic diagram of the support body for in-tire device of the second embodiment.

### DETAILED DESCRIPTION OF THE INVENTION

The first embodiment will describe a first aspect. The second embodiment will describe a second aspect. The third embodiment will describe a third aspect. The fourth embodiment will describe a fourth aspect. The fifth embodiment will describe a fifth aspect. The sixth embodiment will describe a sixth aspect.

### «First Embodiment»

### <Concept of First Embodiment>

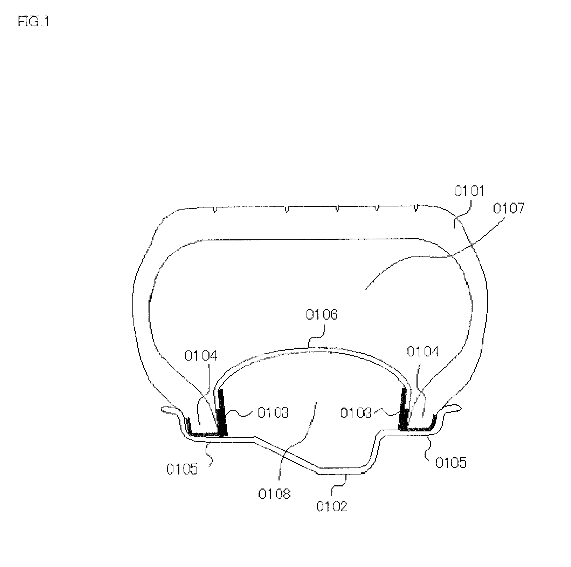

Fig 1 is a conceptual diagram of a support body for in-tire device of the first embodiment. Fig. 1 shows a cross-sectional view of a tubeless tire used as a general automobile tire. A tire 0101 is mounted to a wheel 0102. The black-filled portions in the figure represent support bodies of a first invention, adapted to support in-tire devices. The support bodies 0103 for in-tire devices are fixed by being sandwiched between the bead sections 0104 of the tire and the rim 0105 of the wheel. A portion sandwiched between the rim and each of the bead sections is called a sandwiched section. Among portions of each of the support body for in-tire device, a portion which is connected to or is formed integrally with the sandwiched section and which protrudes to the inner side of the tire is called a device support section. A quiet system 0106 for reducing the noise of the tire is fixed to the device support sections. Thus, the support body for in-tire device enable the devices, such as tire quiet system, etc., two be stably supported in the hollow space within the tire.

### < Configuration of First Embodiment>

A first aspect described in Claim 1 is a support body for in-tire device, comprising a sandwiched section, and a device support section.

The 'sandwiched section' is a 'portion being sandwiched between a bead section and a rim or a wheel, and being fixed'.

The 'bead section of the tire' is a portion in contact with a wheel rim an inner periphery of the tire. The bead section fixes the tire and transmits driving force, and simultaneously seals to prevent air leak. The bead section includes a steel wire so-called a bead wire. The 'rim' is a part of the wheel, and is in contact with the tire.

It is required for effective operation of the tire that adequate amount of air is sealed in the tire. Under a state that the adequate amount of air is sealed in the tire, sufficient pressure is placed between the tire bead section and the rim, so that joint surfaces of the tire bead section and the rim are in close contact with each other by the pressure, thereby sealing the air inside the tire. The sandwiched section is sandwiched between the tire bead section and the rim, thereby being firmly fixed. Even when temporarily using adhesive etc. to prevent separation in rim assembly, after the assembly, the position is fixed without adhesive, so that it is unnecessary to perfume prolonged application of the pressure on the joint portion for long time to enhance the adhesion, and deterioration of adhesion due to plasticizer etc. seeping from the tire due to aging is not caused.

It is preferable to use a material with low air-permeability and airtightness, and an example of the material forming the sandwiched section includes a rubber material such as polyurethane rubber. The shape of the sandwiched section in this embodiment is a plate having uniform thickness about 1 mm, and is not limited to this example. Note that the shape and material have to be suitable for being sandwiched and fixed between the tire bead section and the rim, and for ensuring the airtightness of the bead section.

The 'device support section' is for 'supporting the device in an internal side of the tire'.

The 'internal side of the tire' is formed by being surrounded by the tire and the wheel, and is the side of a space for sealing gas such as air.

The 'device' is, for example, supported in the internal side of the tire in the tire silent system for reducing tire noise. The 'bubble layer' of the 'tire having a bubble layer' of Japanese Unexamined Patent Application Publication No. 2008-273517 is an example of this. Moreover, Japanese Unexamined Patent Application Publication No. 2008-543675 relates to a ", wherein a 'flow-resistant barrier' is coupled to the wheel or the tire and defines an air cavity within the internal air chamber, and comprises a material that provides an acoustical resistance to sound shock waves passing therethrough. The flow-resistant barrier can also be supported by the support body for in-tire device of the present application as a 'device'.

An example of the device includes the core for withstanding load in running flat after puncture of the Japanese Unexamined Patent Application Publication No. 2008-238971. Moreover, any devices for support in the hollow space within the tire may be used for the device.

The device support section is connected with the sandwiched section, and may be formed as a unit by the same material, or may be jointed after being separately formed. When the both of them are formed as a unit by the same material, the device support section is formed by the material with low air-permeability and airtightness such as the polyurethane rubber, and when being jointed after being separately formed, any general material may be used for the device support section.

Examples of the method for jointing or collecting the device support section include stitching method, an adhesion method using adhesive, a fusion method wherein the material is thermally melted, cooled and jointed, a method for jointing by clamp or stapler, a method using a fastener such as a hook-and-loop fastener, and other methods, and there is no limitation.

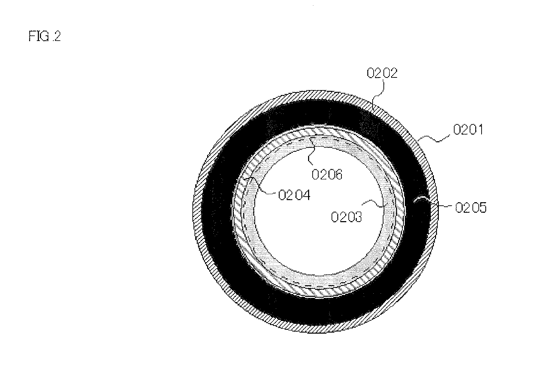

Fig. 2 is a plane view when mounting the support body for in-tire device of the first embodiment to the tire, and is a cross-sectional view when cutting the tire along with the center line. Fig. 2 is a diagram corresponding to the cross-sectional diagram of Fig, 1, and shows that the silent system of Fig. 1 is supported in the internal side. Note that the wheel rim is not included in Fig. 2. The faint-colored portion of the external side of the tire 0201 is a cross-section surface of the tread section 0202. The support body for in-tire device 0203 is fited in the vicinity of the bead section in the internal side of the tire. The device support section of the support body for in-tire device is viewed from the internal side. The tire silent system 0204 is fixed to the external side of the device support section, and is supported in the hollow space inside the tire 0205. The dotted line 0206 on the support body for in-tire device indicates a seam of the tire silent system with device support section.

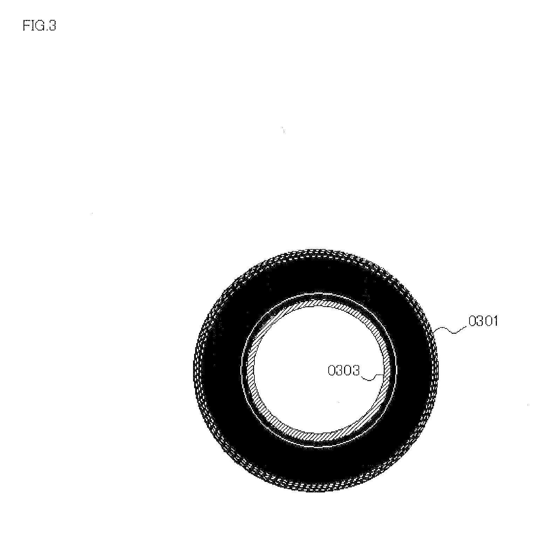

Fig. 3 is another plane view when mounting the support body for in-tire device of the first embodiment to the tire, and is viewed from the external side of the tire. Note that this also does not include the wheel rim. The support body for in-tire device 0303 is fixed, such that the body covers over the internal side of the bead section of the tire 0301. The sandwiched section is viewed from the external side of the tire.

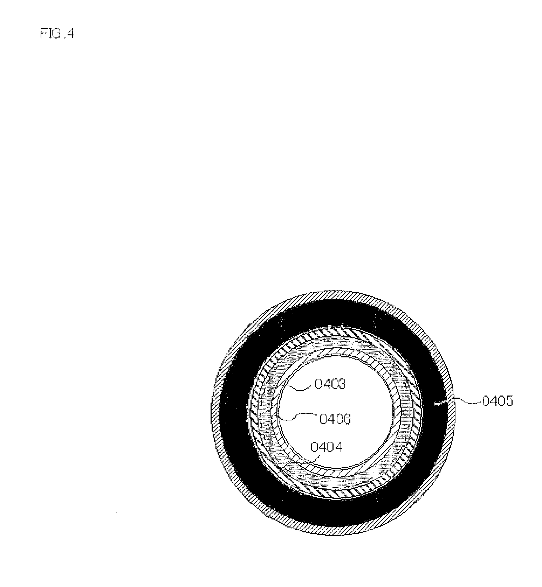

Fig. 4 is a plane view when mounting the support body for in-tire device of the first embodiment to a rim of the tire after mounting it to the tire. The wheel rim 0406 is placed in the internal side of the support body for in-tire device 0403, and supports the body. The tire silent system 0404 in the external side of the support body for in-tire device 0403 is supported in the hollow space inside the tire 0405. Similar to Fig. 2, the support body for in-tire device covers over the tire bead section.

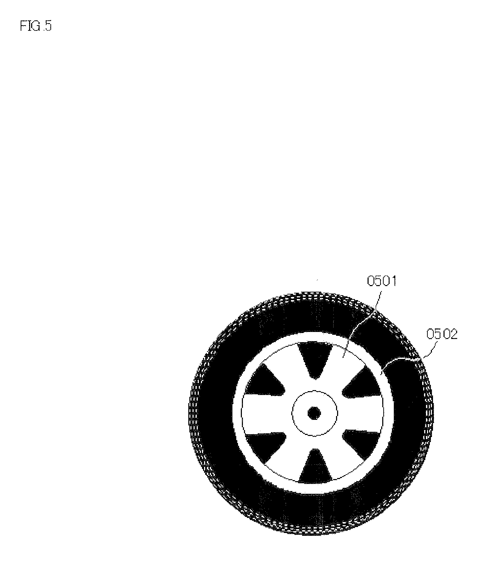

Fig. 5 is a plane view when mounting the support body for in-tire device of the first embodiment to a rim of the tire after mounting it to the tire, and this is viewed from the external side. The flange 0502 completely covers over the support body for in-tire device 0501, and the body is not viewed from the external side. The flange is placed in the outer periphery of the rim, and is for supporting the bead section from the external side to prevent the tire bead section from coming out to the external side, and from separation of the tire.

The support body for in-tire device of Figs. 2 and 3 are formed in a circle shape around the tire bead section. Note that the support body for in-tire device of the first embodiment is not limited to this circle-shaped body. For example, as to the device sufficiently working by being placed on a position of the internal side of the tire, the support body for in-tire device does not necessarily have the circle shape, and just fixes the bead section near the position by partially sandwiching the bead section.

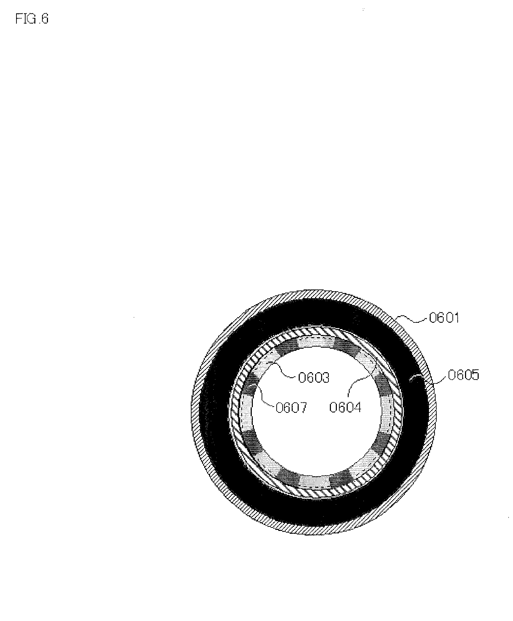

Moreover, when supporting the circle-shaped device, the support body for in-tire device does not necessarily have the circle shape. Fig. 6 is the diagram exemplifying support body for in-tire device not having the circle shape. Similar to the case of Fig. 2, the support body for in-tire device 0603 of Fig. 6 supports the circle-shaped tire silent system 0604 in the in the hollow space within the tire 0605 of the tire 0601, and is divided into eight parts and placed at eight positions of the tire bead section 0607. It is preferable to form a groove for sandwiching the sandwiched section of the support body for in-tire device at the bcad section, where the support body for in-tire device of the first embodiment is placed, according to the shape of the sandwiched section.

In general, the tire is manufactured by a mixing step, a material processing step, a molding step, and a vulcanization step. In the mixing step, raw materials such as natural rubber and sulfur are mixed, and kneaded. In the material processing step, parts such as carcass section, bead section and tread section are individually processed. In the molding step, after assembling the processed carcass section, the processed bead section and the processed tread section etc, the components are molded to a green tire in a molding machine. In the vulcanization step, the green tire is put into a mold, and is compressed from the internal side to the mold using a bladder, a compressor unit having an appearance of a rubber balloon, with vapor at high-temperature and high-pressure, thereby finishing a tire with elasticity and durability, having the final shape and tread pattern.

The forming of the groove at the tire bead section according to the shape of the sandwiched section of the support body for in-tire device is performed in the vulcanization step. This formation of the groove requires a special mold. Note that this does not require a modification of the mold for the whole tire, and only requires modification of a mold for the external side of the bead section.

A description of a method of the first embodiment for mounting the support body for in-tire device to the tire will be provided. The support body for in-tire device of the first embodiment is separately manufactured in a different step from the tire, and at the outset, is joined with a device to be supported in the hollow space within the tire. The joint method is already provided. Then, the two support bodies for in-tire device are connected to both sides sandwiching the device. Subsequently, the two support bodies for in-tire device are fixed to the two bead sections of the tire. The device is supported in the hollow space within the tire by the fixed two support bodies for in-tire device. Here, the adhesive may be applied on the adhesion surface of the tire bead section and the sandwiched section. Note that this adhesive is just for easy assembly of the rim, and not for long-lasting fixation of the support bodies for in-tire device. The tire, the support bodies for in-tire device, and the device thus assembled can be fixed to the wheel by a normal rim assembly step. The above-described method for mounting the support body for in-tire device to the tire is a preferred example of the easy manufacture and easy assembly, and the manufacture and assembly may be embodied in other methods.

### <Brief Description of Effects of First Embodiment>

The support body for in-tire device of the first embodiment performs the fixation using the pressure applied between the tire bead section and the rim without adhesive for the fixation, so that there is no deficiency of causing the deterioration of adhesion due to plasticizer etc. seeping from the tire due to aging leading to separation of the joint section and the device. The support body for in-tire device of the first embodiment enables long-lasting and stable support of the devices such as the tire quiet system, etc. in the hollow space within the tire.

The support body for in-tire device of the first embodiment can be manufactured separately from the tire, thereby enabling simple and low-cost manufacture. In the necessary step of forming of the groove at the bead section of the tire, only the mold for the bead section is required, so that it is unnecessary to carry out major modification of the conventional tire manufacturing process.

The support body for in-tire device of the first embodiment can be easily mounted to the tire, and after the mounting to the tire, it is possible to easily mount the tire to the rim in the same manner as the conventional manner.

### «Second Embodiment»

### <Concept of Second Embodiment>

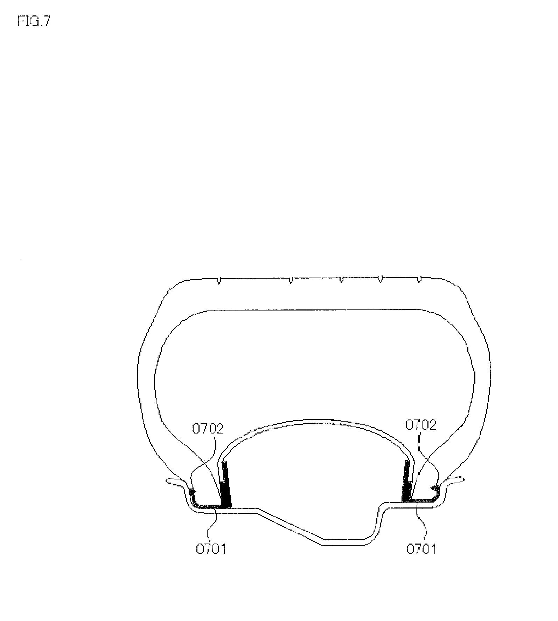

Fig. 7 is a conceptual diagram of support body for in-tire device of a second embodiment. A difference between Figs. 1 and 7 is the sandwiched section 0701 of the support body for in-tire device has a protrusion 0702 at the edge thereof. The sandwiched section is sandwiched between the tire bead section and the rim, and is fixed under sufficient pressure from both of them, so that the sandwiched section does not easily separates. Moreover, the sandwiched section is fixed by mounting this protrusion into a concave portion formed at the tire, so that there is no possibility of disjoint of the sandwiched section from the position between the tire bead section and the rim.

### <Configuration of Second Embodiment>

The support body for in-tire device of the second embodiment comprises the sandwiched section and the support body for in-tire device. The support body for in-tire device of the second embodiment is the support body for in-tire device of the first aspect for a 'tire having the bead section with the concave portion'. Hereinafter, only the components different from those of the first aspect will be described.

The 'concave portion' is a concave, formed at the tire bead section, for fixing the protrusion of the support body for in-tire device, thereby preventing the disjoint of the sandwiched section from the position between the tire bead section and the rim. The description of the 'bead section' is already provided.

The shape of the concave section may be any shape fitting to the protrusion of the support body for in-tire device and achieving the above purpose. Note that it is preferable that the concave portion has a direction and a shape for easy removing upon removing the tire, molded by application of heat and pressure by the bladder, from the mold after the vulcanization step in manufacturing the tire. In the tire of the second embodiment illustrated in Fig. 7, the groove is formed from the sidewall (rim flange side) to the internal side of the tire. The reason for this is that the mold for the bead section is detached in a direction away from the tire sidewall in the vulcanization step, and the groove is formed according to the direction.

The 'sandwiched section' is the sandwiched section of the support body for in-tire device of the first aspect, comprising the 'protrusion for preventing slip of the sandwiched section by being fitted in the concave portion'. The 'protrusion' is to be 'fitted in the concave portion for preventing slip of the sandwiched section'. The 'protrusion' is for being fitted in the 'concave portion', so that the shape thereof fits to the concave portion.

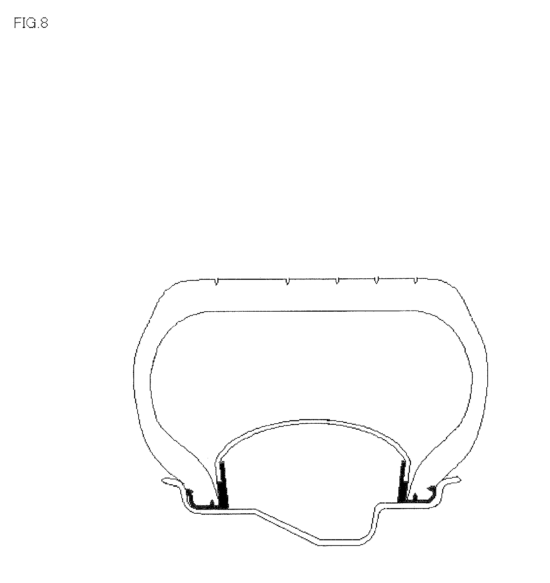

In Fig. 7, the protrusion is formed only at one spot, and may be formed as a plurality of spots as shown in Fig. 8. Note that in the case, the sandwiched section is more firmly fixed, and the detachment of the mold in the vulcanization step becomes slightly difficult.

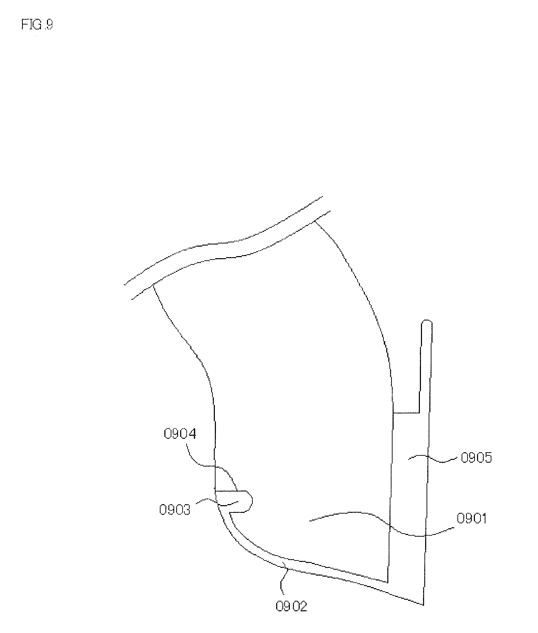

Fig. 9 is an enlarged view showing the support body for in-tire device of the second embodiment fixed with tire bead section. The sandwiched section 0902 of the support body for in-tire device is fitted in the groove formed at a part of the tire bead section 0901. The protrusion 0903 is formed at the edge of the sandwiched section, and the protrusion is fitted in the concave portion 0904 formed at a part of the bead section. The device support section 0905 with an L shape extends to the internal side of the tire of the sandwiched section.

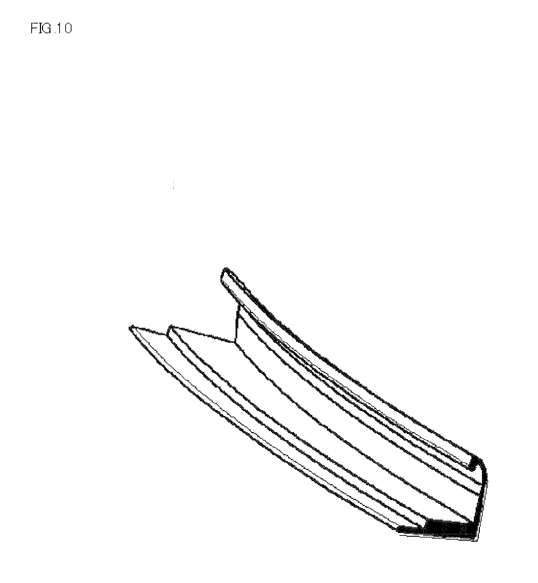

Fig. 10 is a cubic diagram of the support body for in-tire device of the second embodiment, and is a partial cross-sectional view for easy grasp of the cross section and the entire body. When placing the support body for in-tire device by dividing into the plurality of positions as shown in Fig. 6, the support body has such cutaway shape, and when placing in the circle shape as shown in Fig. 2, the circle-shaped support body is used.

### <Brief Description of Effects of Second Embodiment>

The support body for in-tire device of the second embodiment enables more long-lasting and stable support of the devices in comparison with the first embodiment.

### <<Third Embodiment>>

### <Concept of Third Embodiment>

A tire of the third embodiment is same as the tire of the second embodiment.

### <Configuration of Third Embodiment>

The tire of the third embodiment is the 'tire having the bead section with a concave portion, in which the protrusion of the support body for in-tire device is fitted', and these components are already described in the second embodiment.

### <Brief Description of Effects of Third Embodiment>

The tire of the third embodiment enables long-lasting and stable support of the device such as the tire silent system by utilizing the support body for in-tire device of the second embodiment in the hollow space within the tire.

### «Fourth Embodiment»

### <Concept of Fourth Embodiment>

A tire assembly of a fourth embodiment is a tire assembly comprising the device, the support body for in-tire device, and the tire, where the device is supported in the hollow space within the tire by utilizing the support body for in-tire device of the first or second embodiments. These components are already described in the first and second embodiments.

### <Configuration of Fourth Embodiment>

The tire assembly of the fourth embodiment comprises the device, the support body for in-tire device, and the tire. The 'device' is already described in the first embodiment. The 'support body for in-tire device' is already described in the first and second embodiments. The 'tire' is already described in the third embodiment.

### «Fifth Embodiment»

### <Concept of Fifth Embodiment>

The tire assembly of a fifth embodiment is the tire assembly of the fourth embodiment, wherein the device is a tire silent system partitioning internal space of the tire into a plurality of spaces by a gas-permeable member.

### <Configuration of Fifth Embodiment>

In the tire assembly of the fifth embodiment, the device is the tire silent system. Other components are the same as those of the fourth embodiment, and the description is omitted.

In the 'tire silent system', the 'internal space of the tire is partitioned into a plurality of spaces by a gas-permeable member', and the 'tire silent system' has a function of reducing tire noise. The 'flow-resistant barrier' of the Japanese Unexamined Patent Application Publication No. 2008-543675 is an example. A description is provided once more with reference to Fig. 1. The 'tire silent system 06 partitions the internal space of the tire into an external space 07 and an internal space 08.

Examples of vehicle's noise include pattern noise caused when the air in grooves of tread pattern is compressed and exhausted while the vehicle is moving, road noise recognize as in-vehicle noise caused by vibration of the tire due to bumpy road, and squeal noise caused by vibration of the tread upon slip between the tread and road surface in sudden acceleration, sudden breaking, and quick turning. In any of these cases, the noise is caused around the tread, and this propagates through the tire and in-tire air to the vehicle's body.

The reason for partitioning the internal space of the tire into the plurality of cavities exists in that when the shock waves generated in the tread section propagate through the air in the external-side space, passes through the tire silent system, and propagates to the air in the internal-side space, the sound is absorbed by the tire silent system, and converted into thermal energy. When the sound shockwave hits the tire silent system, the air pressure in the internal-side space slightly increases in comparison with that in the external-side space. This pressure difference is acoustical resistance to the shock waves passing therethrough.

The reason for using the air-permeable material for the tire silent system exists in that when the shock waves passing the material having many fine holes, the sound is reduced by mutual interference between waves passing the holes.

### <Brief Description of Effects of Fifth Embodiment>

Although the systems for reducing the tire noise in Japanese Unexamined Patent Application Publication No. 2008-273517, and in Japanese Unexamined Patent Application Publication No. 2008-543675 are quite effective, there has been no method for long-lasting support for the systems in the hollow space within the tire at low cost. The tire assembly of the fifth embodiment can provide such method.

### «Sixth Embodiment»

### <Concept of Sixth Embodiment>

The tire assembly of a sixth embodiment is the tire assembly of the fourth embodiment, wherein the tire silent system is placed inside the tire in a circular pattern around a wheel axis, and the support body for in-tire device also has the circle shape in conformity with the system.

### <Configuration of Sixth Embodiment>

In the tire assembly of the sixth embodiment, the tire silent system is 'placed inside the tire in a circular pattern around a wheel axis'. With reference to Fig. 2 once more, the 'wheel axis' is located at the center of the wheel 01, and the tire silent system 04 is placed 'in the internal space of the tire' 05 in the 'circular pattern' 'around a wheel axis'. Similarly, the support body for in-tire device 03 has the 'circle shape' in conformity with the system. Other configurations are the same as those of the tire assembly of the fifth embodiment.

### <Brief Description of Effects of Sixth Embodiment>

The tire silent system has the circle shape, thereby having the silent effect on the whole tire.

### Description of Reference Numerals

- 0101: Tire
- 0102: Wheel
- 0103: Support body for in-tire device
- 0104: Bead section
- 0105: Rim
- 0106: Tire silent system
- 0107: External space
- 0108: Internal space

## Claims

1. A support body for in-tire device, comprising:
a sandwiched section, being sandwiched between a bead section and a rim or a wheel, and being fixed; and
a device support section for supporting a device in an internal side of a tire.

2. The support body for in-tire device according to Claim 1 being used for a tire having the bead section with a concave portion,
wherein the sandwiched section further comprises a protrusion for preventing slip of the sandwiched section by being fitted in the concave portion.

3. A tire having the bead section with the concave portion for fixing the protrusion of the support body for in-tire device according to Claim 1.

4. A tire assembly supporting the in-tire device utilizing the support body for in-tire device according to Claim 1 or 2.

5. The tire assembly according to Claim 4,
wherein the device is a tire silent system partitioning internal space of the tire into a plurality of spaces by a gas-permeable member.

6. The tire assembly according to Claim 5,
wherein the tire silent system is placed inside the tire in a circular pattern around a wheel axis, and the support body for in-tire device also has a circle shape in conformity with the system.
